Europäisches Patentamt

European Patent Office

Office européen des brevets

(19)

(11) Publication number: **0 131 618**
**B1**

(12) # EUROPEAN PATENT SPECIFICATION

(45) Date of publication of patent specification: **20.07.88**

(51) Int. Cl.⁴: **E 21 B 21/08, E 21 B 21/10, F 16 K 11/085, F 16 K 11/06**

(21) Application number: **84900664.8**

(22) Date of filing: **09.01.84**

(86) International application number:
**PCT/US84/00013**

(87) International publication number:
**WO 84/02949 02.08.84 Gazette 84/18**

(54) **VENT LINE SYSTEM.**

(30) Priority: **17.01.83 US 458206**

(43) Date of publication of application:
**23.01.85 Bulletin 85/04**

(45) Publication of the grant of the patent:
**20.07.88 Bulletin 88/29**

(84) Designated Contracting States:
**AT BE CH DE FR GB LI LU NL SE**

(56) References cited:
**US-A-2 021 104**
**US-A-3 805 833**
**US-A-3 856 037**
**US-A-3 917 008**
**US-A-4 046 191**
**US-A-4 063 602**

**World Oil, vol. 197, no 5, October 1983
(Houston, Texas, US) Ton Muhleman : "Drilling
advances stress efficiency and reliability",
pages 55-60**

(73) Proprietor: **HYDRIL COMPANY**
**714 West Olympic Boulevard**
**Los Angeles California 90015 (US)**

(72) Inventor: **ROCHE, Joseph, R.**
**7507 N. Hollow Circle**
**Humble, TX 77338 (US)**

(74) Representative: **Baillie, Iain Cameron et al**
**c/o Ladas & Parry Isartorplatz 5**
**D-8000 München 2 (DE)**

## Description

The invention disclosed herein relates to a diverter apparatus and system for redirecting the flow of drilling fluid or mud and cuttings that would otherwise be blown upward to the rig floor during a "kick" encountered during initial hole drilling. In general, the apparatus and system according to the invention may be used beneath the drilling floor of any land or marine drilling rig, but in particular the invention finds application with floating, drilling equipment. More particularly, the invention relates to a vent line system for connecting to a diverter in which the system has a blast deflecting means to deflect the mud and cuttings flowing in the vent line overboard assuring that no means are provided to prevent such flow.

When drilling an oil or gas well from a floating vessel, an initial large diameter bore hole is established to shallow depths. Protective conduit typically thirty (30) inches (76.2 cm) in diameter, is secured in the shallow bore through which the drilling takes place. Then a subsea riser is put in place extending from the sea floor to the drilling rig platform.

Flow diverters are typically provided below the rig floor and between the riser and the rotary table of the drilling rig for the purpose of safely venting unbalanced well bore pressure which may produce an upward flow of well flow fluid in the riser having sufficient impetus to issue from the top of the riser, thereby contributing a hazard to personnel and equipment. Such an occurrence, called a "kick" results when the formation fluid pressure exceeds the head in the riser and borehole and is sometimes en countered in conductor hole drilling, making a flow diverter essential before blowout preventers are connected to the drilling system. A flow diverter is considered necessary for safe operation on a floating offshore drilling rig where blowout preventers are placed on the sea floor only after the casing has been set to a considerable depth below the sea floor.

Flow diverter systems which have been provided in the past have faced significant safety problems because the available equipment has required that valves external to the diverter be placed in the vent line system. Such valves have been necessary because the vent line was in general open to the annulus of the drilling conduit below the diverter element adapted for closing the vertical flow path of the bore. The vent line valve was opened simultaneously with or prior to the closing of the diverter element. Typically a "T" joint has been provided to direct flow in the vent line to one of two discharge lines, one leading to the port side of the vessel, the other to the starboard. Valves in each of the discharge lines enabled rig personnel to close one of the discharge lines so that vent line flow could be discharged to the leeward side of the vessel.

In the past, such external valves have sometimes been locked closed by rig personnel while testing the flow diverter system, but after the diverter had been made operational during drilling, the external valves have been unintentionally left locked closed. On other occasions, control system elements for remotely operating the external valves have been inadvertently incorrectly connected, resulting in simultaneous closure of all of the external diverter system valves and the diverter itself. If such flow diverters have closed about the annulus of a drill pipe or other object in the well bore, such flow diverter systems have created an extremely dangerous situation, and in fact, in some cases they have exploded with the result of loss of life and property. The complexity of the circuitry that sequences the operation of the valves and the diverter invites mistakes in connection even by skilled technicians.

US-A- 3,917,008 discloses a diverting system wherein a vent line is open to the drilling conduit below the blowout preventer and is connected to an external diverter valve that is normally biased to close a diverter line for directing drilling fluid away from the drilling rig. This system is essentially subject to the same difficulties as the other prior art systems noted above since it relies on an external diverter valve which must operate without fail or otherwise the vent line and diverter line cannot release drilling fluid in the event of a "kick".

The object of the invention described below, to provide a vent line system which, when used in combination with a novel flow diverter which requires no external vent line valves, is failsafe; that is, when a kick occurs during shallow hole drilling of a well before a blowout preventer has been provided, that kick cannot be accidently confined by the vent line system to build pressure and explode even if controls are misconnected or malfunctioning.

Accordingly, the present invention provides a diverting system for directing drilling fluid away from a drilling rig in the event of a kick comprising a vent line adapted for connection to a flow diverter and a deflect line connected at one end to said vent line and having its other end open to the atmosphere, characterized in that the vent line is uninterruptible and has one end connected to said flow diverter, said deflect line being one of two uninterruptible deflect lines extending in different directions away from said drilling rig, said system including deflecting means connected to one end of each of said two deflect lines and to the other end of said vent line for directing fluid to at least one of said two deflect lines while assuring against simultaneous closure of said two deflect lines.

According to the invention three embodiments of the deflecting means are described. The first includes a deflecting element which may be angularly rotated in the body of the deflecting unit to direct the flow to one or the other of the outlet ports. According to the second embodiment, a deflecting element is adapted to move in a linear direction between two positions intermediate the inlet and outlet ports and accomplishes the same function as the first embodiment. A third embodiment of the deflecting unit is a rotary sleeve blast deflector/selector in which the axis of the sleeve is parallel to the inlet flow and a removable target is provided for impingement of abrasive well flow.

The vent line system of the invention requires but a single motion to operate, is simple and relatively inexpensive to manufacture.

Further features and advantages of the invention will become more apparent by reference to the drawings which are apprehended hereto and wherein like numerals indicate like parts and wherein an illustrative embodiment of the invention is shown, of which:

Figure 1 illustrates the vent line system according to the invention attached to a diverter;

Figure 2 shows an alternative embodiment of the blast deflector;

Figures 3A an 3B illustrate another alternative embodiment of the blast deflector; and

Figure 4 illustrates a flow diverter requiring no external valves to open the bore annulus to the vent line system.

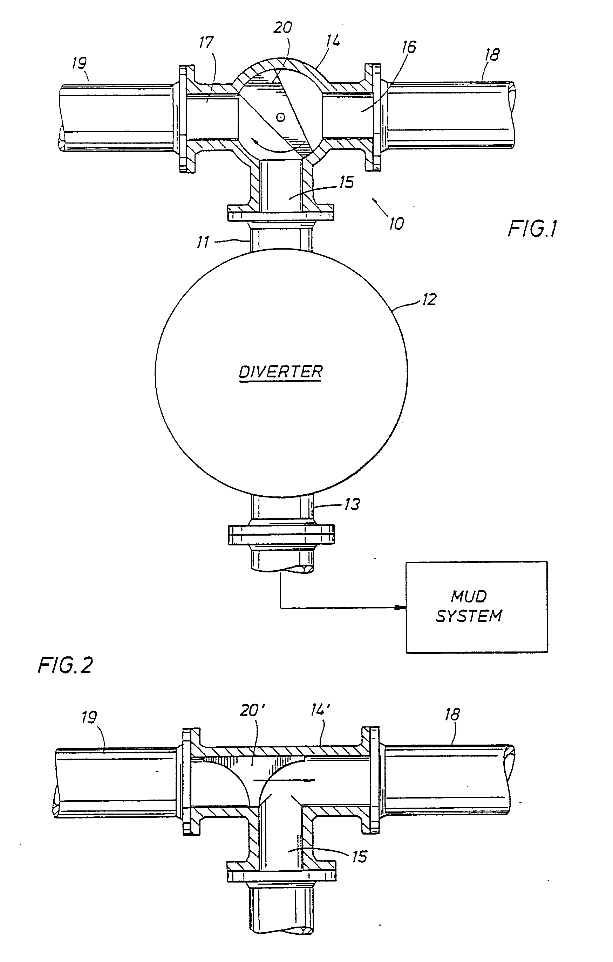

Figure 1 illustrates the vent line system shown generally at 10 in which a vent line 11 is connected to a flow diverter 12. As will be described below, diverter 12 is preferably connected below a drilling rig floor above a drilling conduit and is provided with means for connecting the vent line 11 for directing drilling rig mud and cuttings away from the rig floor on the occasion of a kick. Attached to the diverter also is a flow line means 13 which is connected to the drilling rig mud system.

The blast deflecting unit 14 of the system 10 is a "T" shaped connecting element having an inlet port 15 and outlet ports 16 and 17. Outlet ports 16 and 17 are connected to deflect lines 18 and 19 for directing the flow from the diverter 11 in two directions. Typically one of the deflect lines is directed to the port side of the vessel, while the other deflect line is directed to the starboard side. A blast deflector element 20 disposed within the body of the deflecting unit 14 is adapted to be placed in two positions. As illustrated in Figure 1 the deflector element 20 is disposed in a cylindrical or alternatively a spherically shaped body and is adapted to be placed in one of two directions for deflecting the flow from inlet port 15 to one or the other of the deflecting lines 18 or 19.

Figure 2 shows an alternative embodiment of the deflecting unit 14' in which a blast deflector element 20' is adapted to move linearly along the body 14' to opposite positions whereby flow from the inlet port 15 is deflected to deflect lines 18 or 19.

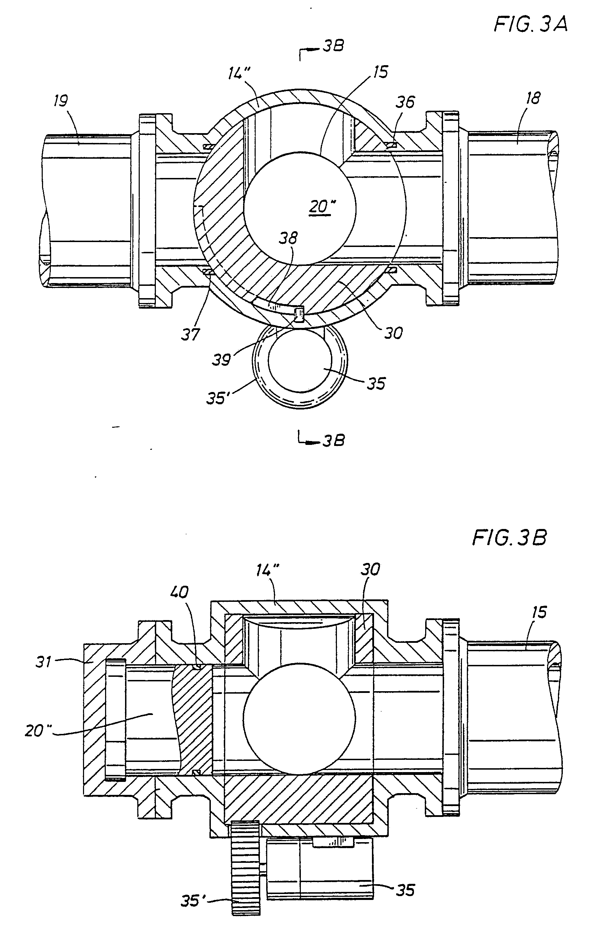

Figures 3A and 3B illustrate another alternative embodiment of the deflecting unit 14" in which the axis of he deflecting element, in this embodiment a rotary sleeve 30, is provided parallel to the inlet port 15. A target 20", preferably one that may be easily replaced by opening target housing 31, provides a sacrificial erosive surface for impingement of abrasive solids in the well flow entering inlet port 15. As illustrated in Figure 3A, the rotary sleeve 30 is in position to direct flow from inlet port 15 to outlet port 18. After rotary sleeve is rotated counter-clockwise by ninety degrees, inlet port 15 is opened to outlet port 19. An actuator 35 is provided to rotate sleeve 30.

As illustrated in Figure 3B, the rotary actuator may be a motor 35 and gear 35' arrangement coupled to sleeve 30, but may be any motive and coupling means commonly employed in oilfield applications for actuating valve elements. Seals 36, 37 are provided in body 14" for sealing against rotary sleeve 30. A seal 40 is provided to seal target material 20" against the body 14". A slot 38 in sleeve 30 and a stop 39 insures that sleeve 30 may travel only between the position shown in Figures 3A and one which is ninety degrees counterclockwise from that illustrated.

In all of the embodiments of the invention, the deflector element 20, 20' or 20" is constructed from a material suited to be highly resistant to erosion from abrasive fluid flow. Such material may be carbide coated steel, steel with a tungsten coating, steel having a ceramic coating on the blast surface, or any suitable material.

As illustrated in Figures 1, 2 and 3, the deflector element and vent line system according to the invention provide a simple device which requires but a single motion to operate between one of two states, yet the vent line system is always open to the diverter thereby assuring that the vent line system itself is prohibited from being closed and thereby insuring that pressurized gas from the drilling conduit to which the diverter 12 is connected is diverted away from the drilling vessel. Even if the deflecting element 20 is unintentionally left in a position causing the vent line fluid and mud to be directed to the windward side of the vessel, all that is required to direct the flow to the leeward side is to change the position of the deflecting unit 20 or 20' or 20".

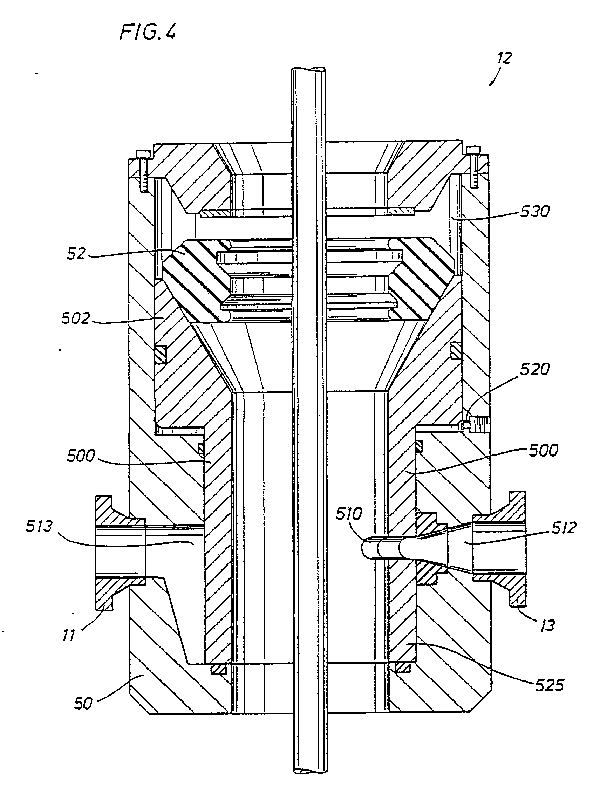

The diverter 12 is preferably of the type requiring no external valves in the vent line 15. Such a diverter is presented by way of example in Figure 4.

Figure 4 illustrates an embodiment of the flow diverter 12 in which a piston 500 is provided not only for closing the annular packing element 52 about an object in the bore of the diverter, but also for closing a flow line 13 and opening a vent line 11 during an emergency. The piston 500 has an upper conical bowl portion 502 adapted for engagement with a packing element 52 and forcing it radially inward as the piston 500 moves axially upward. A hole 510 in the piston wall is normally in alignment with a hole 512 in the body 50 of the diverter 12. The second hole 513 in the body wall, provided in alignment with the vent line 11, is covered by the piston 500 wall when the diverter is in its normal state. When a source of high pressure hydraulic fluid is provided beneath the piston 500 via conduit 520, piston 500 is forced upward thereby opening vent line 11 via hole 513 providing fluid communication with the bore of the diverter 12. As piston 500 moves up, hole 512 in the body wall becomes covered by the lower part 525 of piston 500, and ultimately, hole 512 becomes completely covered by the lower part 525 of the piston.

Means are provided for insuring that the packing element 52 does not close about a pipe or other object in the bore hole before hole 512 is covered and hole 513 is opened by providing a space 530 above the packing element through which the packing element is free to move axially upward without being forced radially inward as the upper conical portion 502 of the piston 500 moves up. Thus, a means is provided by which the vent line 11 is opened and the flow line 13 is closed from fluid communication with the bore of the flow diverter 12 before the annular packing element 52 is enabled to fully close about a pipe or other object in the bore hole or to completely close the vertical flow path of the diverter 12 in the absence of an object in the bore.

There has been provided a vent line system for use with a flow diverter in which no valves external to the diverter are provided, assuring that inadvertent errors in operation or inoperativeness of valves external to the diverter do not create the opportunity for closing flow exits from the diverter after the annulus is closed.

Various modifications and alterations in the described structures will be apparent to those skilled in the art of the foregoing description which does not depart from the spirit of the invention as claimed.

**Claims**

1. A diverting system (10) for directing drilling fluid away from a drilling rig in the event of a kick comprising a vent line (11) adapted for connection to a flow diverter (12) and a deflect line connected at one end to said vent line (11) and having its other end open to the atmosphere, characterized in that the vent line (11) is uninterruptible and has one end connected to said flow diverter (12), said deflect line being one of two uninterruptible deflect lines (18,19) extending in different directions away from said drilling rig, said system including deflecting means (14, 14', 14") connected to one end of each of said two deflect lines (18, 19) and to the other end of said vent line (11) for directing fluid to at least one of said two deflect lines (18, 19) while assuring against simultaneous closure of said two deflect lines (18, 19).

2. The system of claim 1, characterized in that the deflecting means comprises a tubular "T" connecting element (14, 14') having a single inlet (15) and a pair of outlets (16, 17), the outlets (16, 17) of the connecting element (14, 14') being connected, respectively, to said two deflect lines (18, 19) and the inlet (15) of the connecting element (14, 14') being connected to the outlet of the vent line (11), and a deflecting element (20, 20') is provided disposed in the connecting element (14, 14') for directing flow from the inlet (15) of the connecting element (14, 14') to at least one of the outlets (16, 17) of the connecting element (14, 14').

3. The system of claim 2, characterized in that the deflecting element (20) is disposed between the outlets (16, 17) of the connecting element (14) and is adapted for angular rotation from a first position, where flow from the vent line (11) via the inlet (15) of the connecting element (14) is directed by the element (20) to a first connecting element outlet (16), to a second position, where flow from the vent line (11) is directed by the element (20) to a second connecting element outlet (17).

4. The system of claim 2, characterized in that the deflecting element (20') is disposed between the outlets (16, 17) of the connecting element (14') and is adapted for linear movement from a first position, where flow from the vent line (11) via the inlet (15) of, the connecting element (14') is directed by the element (20') to a first connecting element outlet (16), to a second position, where flow from the vent line (11) is directed by the element (20') to a second connecting element outlet (17).

5. The system of claim 1, characterized in that the deflecting means comprises, a housing (14") having three external ports (15-17), one of the ports (15) being connected to the vent line (11), a second one of the ports (16) being connected to the first deflect line (18), and a third one of the ports (17) being connected to the second deflect line (19), and a rotary sleeve (30) in the housing (14") having its bore coaxially aligned with the port (15) connected to the vent line (11) and adapted for rotation between a first position where a first sleeve outlet is aligned with the housing port (16) connected to the first deflect line (18) and a second position where a second sleeve outlet is aligned with the housing port (17) connected to the second deflect line (19).

6. The system of claim 5, characterized by actuating means (35) for rotating the rotary sleeve (30) between the first and second positions.

7. The system of any of claims 2 to 6, characterized in that the deflecting means further comprises, a removable target means (20, 20', 20") disposed at the opposite end from the inlet or port (15) connected to the vent line (11), the target means (20, 20', 20") being constructed of an erosion resistant material.

8. The system of any of the preceding claims, characterized in that said flow diverter means (12) has means (500) for controlling flow of fluid through said vent line (11).

**Patentansprüche**

1. Abzweigsystem (10) zum Wegleiten von Bohrspülmittel von einem Bohrturm im Falle eines Überdrückes ("kick") mit einer Strömungsabzweiger (12) verbundbaren Druckentlastungsleitung (11) und einer mit ihrem einen Ende mit der Druckentlastungsleitung (11) verbundenen Abzweigleitung, die an ihrem anderen Ende zur Atmosphäre offen ist, dadurch gekennzeichnet, daß die Druckentlastungsleitung (11) ununterbrechbar und an ihrem einen Ende mit dem Strömungsabzweiger (12) verbunden ist, daß die Abzweigleitung eine von zwei ununterbrachbaren Abzweigleitungen (18, 19) ist, die sich in verschiedenen Richtungen von dem Bohrturm weg erstrecken, daß das System eine Umlenkeinrichtung (14, 14', 14'') besitzt die mit einem Ende jeder der beiden Abzweigleitungen (18, 19) und mit dem anderen Ende der Druckentlastungsleitung (11) verbunden ist und dazu dient mindestens einer der beiden Abzweigleitungen (18, 19) Fluid zuzuführen und ein gleichzeitiges Sperren der beiden Abzweigleitungen (18, 19) zu verhindern.

2. System nach Anspruch 1, dadurch gekennzeichnet, daß die Umlenk einrichtung T-förmiges Rohrverbindungsstück (14, 14') umfaßt das einen einzigen Einlaß (15) und zwei Auslässe (16, 17) besitzt, daß die Auslässe (16, 17) des Verbindungsstückes (14, 14') mit je einer der beiden Abzweigleitungen (18, 19) verbunden sind, daß der Einlaß (15) des Verbindungs stückes (14, 14') mit dem Auslaß der Druckentlastungsleitung (11) verbunden ist und daß in dem Verbindungsstück (14, 14') ein Umlenkelement (20, 20') angeordnet ist, daß dazu dient, eine von dem Einlaß (15) des Verbindungsstückes (14, 14') kommende Strömung zu mindestens einem der Auslässe (16, 17) des Verbindungsstückes (14, 14') umzulenken.

3. System nach Anspruch 2, dadurch gekennzeichnet, daß das Umlenkelement (20) zwischen den Auslässen (16, 17) des Verbindungsstückes (14) angeordnet und aus einer ersten Stellung, in der über den Einlaß (15) das Verbindungsstückes (14) von der Druckentlastungsleitung (11) kommende Strömung von dem Element (20) zu einem ersten Auslaß (16) des Verbindungsstückes geführt wird, in eine zweite Stellung verdrehbar ist, in der von der Druckentlastungsleitung (11) kommende Strömung von dem Element (20) zu dem zweiten Auslaß (17) des Verbindungsstückes geführt wird.

4. System nach Anspruch 2, dadurch gekennzeichnet, daß das Umlenkelement (20') zwischen den Auslässen (16, 17) des Verbindungsstückes angeordnet und zwischen einer ersten Stellung, in der eine über den Einlaß (15) des Verbindungsstückes (14') von der Druckentlastungsleitung (11) kommende Strömung von dem Element (20') zu einem ersten Auslaß (16) des Verbindungsstückes geführt wird, geradlinig in eine zweite Stellung bewegbar ist, in der von der Druckentlastungsleitung (11) kommende Strömung von dem Element (20') zu einem zweiten Auslaß (17) des Verbindungsstückes geführt wird.

5. System nach Anspruch 1, dadurch gekennzeichnet, daß die Umlenkeinrichtung ein Gehäuse (14'') mit drei Außenanschlüssen (15 bis 17) besitzt, von denen einer (15) mit der Druckentlastungsleitung (11), ein zweiter (16) mit der ersten Abzweigleitung (18) und ein dritter (17) mit der zweiten Abzweigleitung (19) verbunden ist, sowie eine in dem Gehäuse (14'') angeordnete, drehbare Hülse (30), deren Bohrung mit dem mit der Druckentlastungsleitung (11) verbundenen Anschluß (15) koaxial fluchtet und die zwischen einer ersten Stellung, in der ein erster Auslaß der Hülse mit dem mit der ersten Abzweigleitung (18) verbundenen Gehäuseanschluß (16) fluchtet, und einer zweiten Stellung drehbar ist, in der ein zweiter Auslaß der Hülse mit dem mit der zweiten Abzweigleitung (19) verbundenen Gehäuseanschluß (17) fluchtet.

6. System nach Anspruch 5, gekennzeichnet durch einen Stelltrieb (35) zum Drehen der drehbaren Hülse (30) zwischen der ersten und der zweiten Stellung.

7. System nach einem der Ansprüche 2 bis 6, dadurch gekennzeichnet, daß die Umlenkeinrichtung ferner eine wegnehmbare Pralleinrichtung (20, 20', 20'') besitzt, die an dem Ende angeordnet ist, das dem dem mit der Druckentlastungsleitung (11) verbundenen Einlaß bzw. Anschluß (15) entgegengesetzt ist, und daß die Pralleinrichtung (20, 20', 20'') aus einem ersosionsbeständigen Werkstoff besteht.

8. System nach einem der vorhergehenden Ansprüche, dadurch gekennzeichnet, daß der Strömungsabzweiger (12) eine Einrichtung (500) zur Steuerung der Strömung von Fluid durch die Druckentlastungsleitung (11) besitzt.

**Revendications**

1. Un système de dérivation (10) pour évacuer du fluide de forage d'une tour de forage en cas d'incident, comprenant un conduit d'évent (11) adapté pour être relié à un dérivateur d'écoulement (12) et un conduit de déviation relié par une extrémité audit conduit d'évent (11) et dont l'autre extrémité est ouverte vers l'atmosphère, caractérisé en ce que le conduit d'évent (11) ne peut pas être interrompu et comporte une extrémité reliée audit dérivateur d'écoulement (12), ledit conduit de déviation constituant l'un de deux conduits de déviation ne pouvant pas être interrompus (18, 19), s'étendant dans des directions différentes à partir de ladite tour de forage, ledit système comprenant des moyens de déviation (14, 14', 14'') reliés à une extrémité de chacun des deux conduits de déviation précités (18, 19) ainsi qu'à l'autre extrémité dudit conduit d'évent (11) afin de diriger du fluide vers au moins un des deux conduits de déviation précités (18, 19) tout en empêchant une fermeture simultanée de ces deux conduits de déviation (18, 19).

2. Le système selon la revendication 1, caractérisé en ce que les moyens de déviation comprennent un élément tubulaire de raccordement en "T" (14, 14') comportant une seule entrée (15) et deux sorties (16, 17), les sorties (16, 17) de l'élément de raccordement (14, 14') étant reliées, respectivement, aux deux conduits de déviation précités (18, 19) et l'entrée (15) de l'élément de raccordement (14, 14') étant reliée à la sortie du conduit d'évent (11), et il est prévu un élément de déviation (20, 20') disposé dans l'élément de raccordement (14, 14') pour diriger un écoulement provenant de l'entrée (15) de l'élément de raccordement (14, 14') vers au moins une des sorties (16, 17) de l'élément de raccordement (14, 14').

3. Le système selon la revendication 2, caractérisé en ce que l'élément de déviation (20) est disposé entre les sorties (16, 17) de l'élément de raccordement (14) et est adapté pour tourner depuis une première position, où un écoulement provenant du conduit d'évent (11) par l'intermédiaire de l'entrée (15) de l'élément de raccordement (14) est dirigé par l'élément (20) vers une première sortie (16) de l'élément de raccordement, jusque dans une seconde position où un écoulement provenant du conduit d'évent (11) est dirigé vers l'élément (20) vers une seconde sortie (17) de l'élément de raccordement.

4. Le système selon la revendication 2, caractérisé en ce que l'élément de déviation (20') est disposé entre les sorties (16, 17) de l'élément de raccordement (14') et est adapté pour se déplacer linéairement depuis une première position, où un écoulement provenant du conduit d'évent (11) par l'intermédiaire de l'entrée (15) de l'élément de raccordement (14') est dirigé par l'élément (20') vers une première sortie (16) de l'élément de raccordement, jusque dans une seconde position, où un écoulement provenant du conduit d'évent (11) est dirigé par l'élément (20') vers une seconde sortie (17) de l'élément de raccordement.

5. Le système selon la revendication 20, caractérisé en ce que les moyens de déviation com- prennant un carter (14'') comportant trois orifices externes (15—17), un des orifices (15) étant relié au conduit d'évent (11), un second desdits orifices (16) étant relié au premier conduit de déviation (18) et un troisième desdits conduits (17) étant relié au second conduit de déviation (19), et un manchon rotatif (30) situé dans le carter (14''), dont l'alésage est aligné coaxialement avec l'orifice (15) relié au conduit d'évent (11) et qui est adapté pour tourner entre une première position dans laquelle une première sortie de manchon est alignée avec l'orifice de carter (16) relié au premier conduit de déviation (18) et une seconde position où une seconde sortie de manchon est alignée avec l'orifice de carter (17) relié au second conduit de déviation (19).

6. Le système selon la revendication 5, caractérisé par un moyen d'actionnement (35) pour faire tourner le manchon rotatif (30) entre les première et seconde positions.

7. Le système selon une quelconque des revendications 2 à 6, caractérisé en ce que les moyens de déviation comprennent en outre un moyen-cible amovible (20, 20', 20'') disposé à l'extrémité opposée à l'entrée ou orifice (15) relié au conduit d'évent (11), le moyen-cible (20, 20', 20'') étant formé d'un matériau résistant à l'érosion.

8. Le système selon une quelconque des revendications précédentes, caractérisé en ce que ledit moyen de dérivation d'écoulement (12) comporte un moyen (500) pour commander un écoulement de fluide dans ledit conduit d'évent (11).

FIG.1

DIVERTER

MUD SYSTEM

FIG.2

1

0 131 618

FIG. 3A

FIG. 3B

2

FIG.4